# FASCICULE DE BREVET EUROPEEN

(11) **EP 0 683 877 B1**
(45) Date de publication et mention de la délivrance du brevet: **14.05.1997**
(21) Numéro de dépôt: 94907587.3
(22) Date de dépôt: 17.02.1994
(51) Int. Cl.: F16H 61/02, F16D 43/12

(54) **DISPOSITIF DE TRANSMISSION, EN PARTICULIER POUR VEHICULE, ET PROCEDES DE PILOTAGE S'Y RAPPORTANT**
GETRIEBEEINHEIT, INSBESONDERE FÜR FAHRZEUGE UND STEUERVERFAHREN DAFÜR
TRANSMISSION DEVICE, PARTICULARLY FOR VEHICLES, AND CONTROLLED METHODS ASSOCIATED THEREWITH

(30) Priorité: 18.02.1993 FR 9301841
(43) Date de publication de la demande: 29.11.1995
(73) Titulaire: ANTONOV AUTOMOTIVE TECHNOLOGIES B.V., 3013 AL Rotterdam (NL)
(72) Inventeur: ANTONOV, Roumen, F-75008 Paris (FR)
(74) Mandataire: Pontet, Bernard
(86) Numéro de dépôt international: FR9400176
(87) Numéro de publication internationale: WO9419629

(56) Documents cités:
- WO-A-91/13275
- WO-A-92/07206
- WO-A-93/08411
- DE-B- 1 230 679
- US-A- 5 033 598

## Description

La présente invention concerne un dispositif de transmission automatique à au moins deux rapports, en particulier pour véhicule.

La présente invention concerne également des procédés pour piloter un tel dispositif de transmission.

On connaît d'après le WO-A-9207206 une transmission automatique dans laquelle un embrayage relie sélectivement deux organes rotatifs d'un engrenage différentiel tel qu'un train épicycloïdal selon que l'une ou l'autre de deux forces antagonistes domine. Ils s'agit par exemple d'une poussée axiale produite par une denture hélicoïdale montée mobile axialement, tendant à desserrer l'embrayage à l'encontre de ressorts et/ou d'une force produite par un moyen tachymétrique centrifuge, tendant à serrer l'embrayage. Lorsque l'embrayage est desserré, il faut empêcher la rotation d'un troisième organe rotatif de l'engrenage différentiel, et cela peut être assuré par une roue libre empêchant ce troisième organe de tourner en inverse.

Ce type de transmission est très avantageux car son fonctionnement de base ne nécessite ni source de puissance extérieure, ni capteurs, ni circuit de pilotage. C'est le dispositif de transmission lui-même qui produit les forces qui vont le piloter et ces forces sont en même temps une mesure des paramètres nécessaires au pilotage.

Cependant, un tel dispositif de transmission n'est pas directement capable d'optimiser le fonctionnement en retenue, c'est à dire lorsqu'on relâche la pédale d'accélérateur pour que le moteur assure un certain freinage du véhicule. Dans ce cas, le couple résistant du moteur ne dépend plus que de sa vitesse de rotation et n'est donc pas indicatif de la décélération souhaitée par le conducteur. De plus, dans le cas où le couple est détecté par une réaction de denture hélicoïdale, cette réaction change de sens lors du fonctionnement en retenue et elle ne tend donc plus à desserrer l'embrayage. En outre, dans le cas de la structure à roue libre, même si la réaction de denture était capable de desserrer l'embrayage pour créer ainsi l'une des conditions du fonctionnement en réducteur, une autre condition demeurerait non satisfaite : pendant le fonctionnement en retenue, le troisième organe rotatif de l'engrenage différentiel tend à tourner non pas en inverse, mais à grande vitesse dans le sens normal, ce que la roue libre ne peut pas empêcher.

On connaît encore d'après le WO-A-91 13 275 un dispositif du même genre, mais ne faisant pas intervenir la réaction de denture, et dans lequel des premiers moyens sont prévus pour appliquer au moyen tachymétrique une sollicitation supplémentaire modifiant le seuil de vitesse pour lequel le rapport de transmission change, et des seconds moyens pour immobiliser le troisième organe rotatif et imposer ainsi le fonctionnement en retenue avec le rapport de transmission le plus démultiplié. Mais ces dispositions nécessitent un pilotage compliqué, avec des risques de chocs, et en pratique ne permettent pas d'exploiter le frein moteur de manière optimale.

Le but de la présente invention est de proposer un dispositif de transmission du type dans lequel les moyens d'accouplement sélectif sont commandés par des forces antagonistes variables, mais qui permette en outre de provoquer le fonctionnement en réducteur dans des conditions autres que celles définies par les forces antagonistes, notamment lorsque le moteur du véhicule fonctionne en retenue.

Suivant l'invention, le dispositif de transmission comprenant une combinaison d'éléments rotatifs portant des dentures interengrenées, un moyen d'accouplement sélectif, attaqué par des moyens de sollicitation antagonistes produisant des forces dont une au moins varie de manière monotone en fonction d'au moins un paramètre de fonctionnement du dispositif de transmission et une roue libre montée pour activer sélectivement l'un des éléments rotatifs lorsque le moyen d'accouplement sélectif est dans un état désaccouplé, la combinaison d'éléments rotatifs réalisant deux rapports de transmission différents selon que le moyen d'accouplement sélectif est à l'état désaccouplé ou respectivement dans un état accouplé, le dispositif comprenant en outre des moyens de sollicitation supplémentaire pour appliquer sélectivement au moyen d'accouplement une force supplémentaire favorisant l'un prédéterminé des états accouplé et désaccouplé du moyen d'accouplement sélectif et en conséquence l'établissement du rapport de transmission correspondant dans le dispositif de transmission, et des moyens d'activation pour, indépendamment de la roue libre, placer l'élément rotatif associé à la roue libre dans un état d'activation correspondant au rapport de transmission favorisé par la force supplémentaire, caractérisé en ce que les moyens d'activation sont conjugués mécaniquement avec les moyens de sollicitation supplémentaire pour réaliser ledit état d'activation lorsque les moyens de sollicitation supplémentaire maintiennent le moyen d'accouplement sélectif dans ledit état prédéterminé.

Les moyens de sollicitation supplémentaire introduisent dans le dispositif de transmission une force qui simule un accroissement ou une réapparition de l'une des forces antagonistes pilotant normalement le dispositif, de manière à davantage favoriser le fonctionnement du dispositif selon l'un des rapports de transmission, par rapport au cas du pilotage automatique par les moyens de sollicitation antagonistes seuls. Cette action se conjugue automatiquement avec une activation spécifique de l'organe rotatif associé à la roue libre. On peut ainsi par exemple, aisément et sans risque, faire fonctionner le dispositif sur son rapport le plus démultiplié dans toutes circonstances où cela est désiré et souhaitable, notamment lorsque le moteur fournit un couple négatif.

De préférence, la combinaison de dentures est un engrenage différentiel comprenant plusieurs éléments rotatifs portant des dentures interengrenées, et le moyen d'accouplement sélectif est un embrayage monté fonctionnellement entre deux des éléments rotatifs pour faire sélectivement fonctionner l'engrenage différentiel selon un premier et un deuxième rapport de transmission, tandis qu'une roue libre empêche un élément rotatif de réaction de l'engrenage différentiel de tourner en inverse lorsque l'embrayage permet une rotation relative entre ses deux éléments. Dans ce cas, il est avantageusement prévu :
- comme moyens d'activation, des moyens d'immobilisation pour sélectivement bloquer l'élément rotatif de réaction indépendamment de la roue libre ; et
- des moyens d'actionnement pour simultanément actionner les moyens d'immobilisation dans le sens du blocage et les moyens de sollicitation supplémentaire dans le sens du desserrage de l'embrayage.

Les moyens d'actionnement provoquent à la fois le desserrage de l'embrayage et l'immobilisation de l'organe de réaction même lorsqu'il tend à tourner dans le sens normal. On réalise donc ainsi les conditions nécessaires pour que l'engrenage différentiel fonctionne en réducteur même si l'arbre d'entrée du dispositif est soumis à un couple négatif, c'est à dire s'exerçant en sens contraire du sens de rotation (couple de retenue).

Selon un deuxième aspect de l'invention, le procédé pour piloter un dispositif de transmission selon le premier aspect, dans lequel les moyens de sollicitation antagonistes comprennent des moyens élastiques tendant à accoupler les moyens d'accouplement, est caractérisé en ce que pour la mise en mouvement d'un arbre de sortie du dispositif, on active les moyens de sollicitation supplémentaire pour placer le moyen d'accouplement sélectif à l'état désaccouplé à l'encontre des moyens élastiques de façon que la mise en mouvement débute avec le rapport de transmission le plus court.

De manière classique, on dit qu'un rapport de transmission est "court" ou "bas" lorsqu'il correspond à une faible vitesse de la sortie par rapport à la vitesse d'entrée. Dans le cas contraire, le rapport est dit "long" ou "élevé".

Selon un troisième aspect de l'invention, le procédé pour piloter un dispositif de transmission selon le premier aspect est caractérisé en ce que lorsque le couple appliqué à un arbre d'entrée du dispositif est en sens contraire de la rotation de cet arbre, on active sélectivement les moyens de sollicitation supplémentaire pour faire fonctionner la combinaison de dentures avec son rapport de transmission le plus court.

Selon un quatrième aspect de l'invention, le procédé pour piloter un dispositif de transmission selon le premier aspect est caractérisé en ce qu'on active les moyens de sollicitation supplémentaire lorsqu'on détecte une forte demande de puissance de la part du conducteur du véhicule.

Selon un cinquième aspect de l'invention, le procédé pour piloter un dispositif de transmission selon le premier aspect, est caractérisé en ce qu'on active les moyens de sollicitation supplémentaire de façon qu'ils appliquent au moyen d'accouplement sélectif une force qui ne surmonte celle de masselottes centrifuges tendant à accoupler le moyen d'accouplement que si la force des masselottes correspond à une vitesse permettant de passer du plus long au plus court des deux rapports de transmission sans risque de survitesse à l'entrée du dispositif.

D'autres particularités et avantages de l'invention ressortiront encore de la description ci-après, relative à des exemples non-limitatifs.

Aux dessins annexés :
- la figure 1 est une vue en coupe longitudinale schématique d'une transmission à quatre rapports comprenant plusieurs dispositifs de transmission successifs selon l'invention, au repos en haut de la figure et au point mort en bas de la figure ;
- la figure 2 est une vue à échelle agrandie de la partie supérieure gauche de la figure 1 ;
- les figures 3 à 5 sont des vues analogues à la moitié supérieure de la figure 1, mais relatives au fonctionnement en 2ième vitesse, en 4ième vitesse, et respectivement en retenue en 3ième vitesse ;
- la figure 6 est une vue de face schématique de la pompe de démarrage des figures 1 à 5 ;
- la figure 7 est un schéma hydraulique de la transmission des figures 1 à 5 ;
- la figure 8 est relative à une variante de schéma hydraulique pour la transmission des figures 1 à 5 ;
- la figure 9 correspond à la partie supérieure gauche de la figure 1, mais dans le cas d'un deuxième mode de réalisation ; et
- la figure 10 correspond à la partie droite de la figure 1, mais dans le cas d'un troisième mode de réalisation.

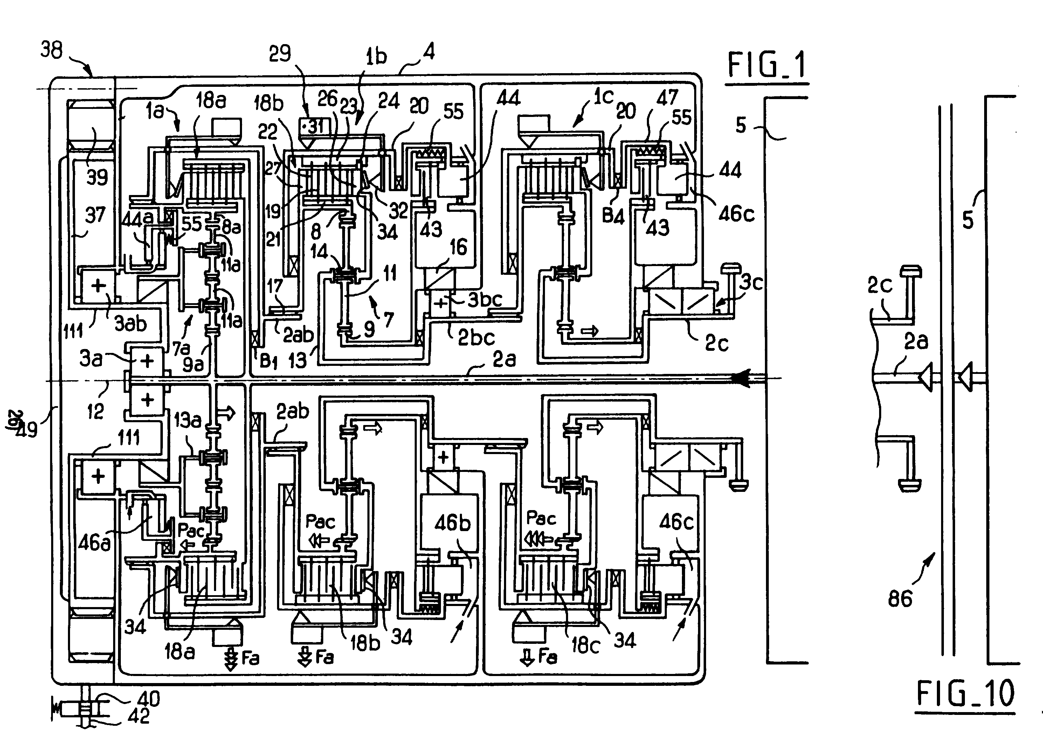

La transmission à quatre rapports représentée à la figure 1, destinée en particulier à une automobile, comprend trois dispositifs de transmission -ou modulessuccessifs 1a, 1b, 1c, à deux rapports chacun, montés en série entre un arbre d'entrée 2a et un arbre de sortie 2c de la transmission. L'arbre d'entrée 2a constitue aussi l'arbre d'entrée dans le module la. Il est relié à l'arbre de sortie d'un moteur 5 de véhicule sans interposition d'embrayage. L'arbre de sortie 2c constitue en même temps l'arbre de sortie du module lc et comporte une roue dentée destinée à entraîner par engrènement l'entrée d'un différentiel pour l'entraînement des roues motrices d'un véhicule. Entre la roue dentée et l'entrée du différentiel peut être interposé un inverseur marche avant - marche arrière à commande manuelle.

L'arbre d'entrée 2a traverse toute la transmission, le premier module la étant le plus éloigné du moteur du véhicule. Le troisième module lc est le plus proche du moteur, de sorte que la roue dentée de sortie est tout près du moteur. Les modules 1b et 1c sont disposés autour de l'arbre d'entrée 2a sans être liés en rotation à lui.

Il y a le long de l'axe géométrique 12 de la transmission, entre l'arbre d'entrée 2a et l'arbre de sortie 2c, deux arbres intermédiaires successifs 2ab, 2bc, qui constituent chacun l'arbre de sortie du module 1a, 1b respectivement situé en amont, et l'arbre d'entrée du module 1b, 1c respectivement situé en aval. Les arbres d'entrée 2a, intermédiaires 2ab, 2bc et de sortie 2c sont immobilisés axialement relativement à un carter 4 de la transmission. Pour cela, l'arbre d'entrée 2a est supporté en rotation, avec immobilisation axiale, dans un moyeu 11 au moyen d'un palier 3a. Le moyeu 11 est lui-même supporté en rotation, avec immobilisation axiale, relativement au carter 4 par un palier 3ab. L'arbre intermédiaire 2ab est immobilisé axialement par appui axial, avec liberté de rotation relative, contre l'arbre d'entrée 2a au moyen d'une butée axiale B1. L'arbre intermédiaire 2bc et l'arbre de sortie 2c sont chacun supportés par un palier à roulement 3bc, 3c relativement au carter 4.

Chaque module est capable de fonctionner en réducteur ou en prise directe. Un premier rapport est réalisé lorsque les trois modules fonctionnent en réducteur, un deuxième rapport lorsque le premier module la fonctionne en prise directe et les deux autres en réducteur, un troisième rapport avec les deux premiers modules 1a et 1b en prise directe et le troisième lc en réducteur, et un quatrième rapport avec les trois modules en prise directe.

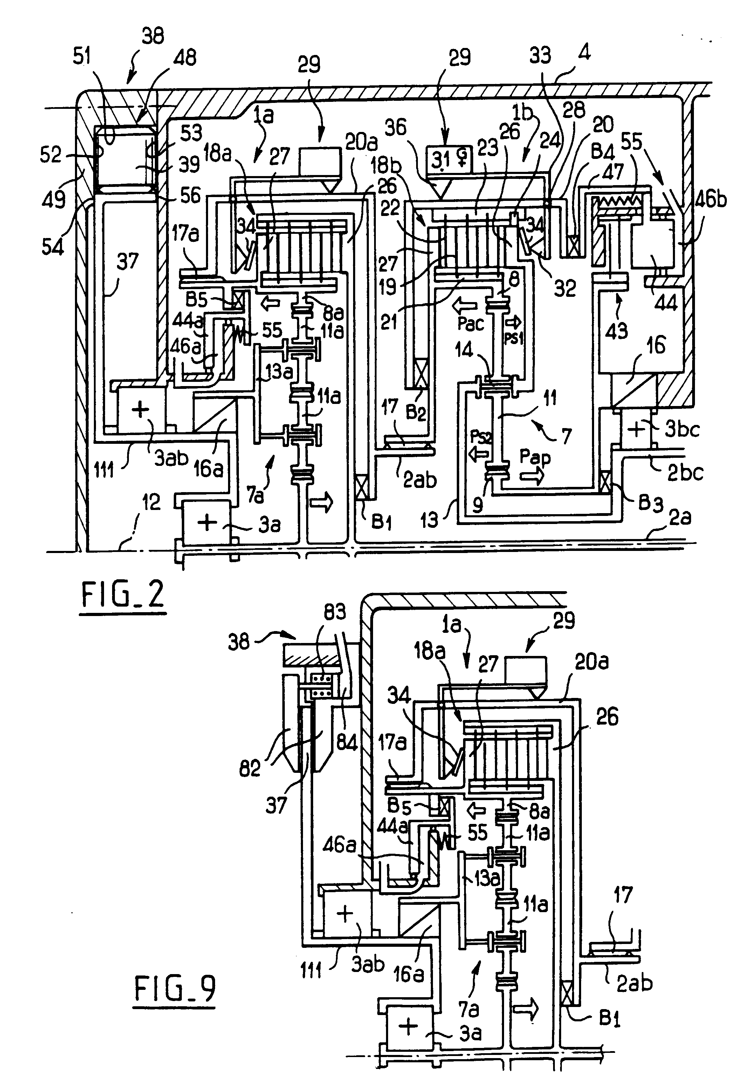

On va maintenant décrire plus en détail, en référence à la figure 2 le module 1b, cette description étant valable aussi pour le module lc qui est identique au module 1b excepté que son arbre d'entrée est l'arbre 2bc et que son arbre de sortie est l'arbre 2c supporté par le palier 3c.

Un train épicycloïdal 7 comprend une couronne 8 à denture intérieure et une roue planétaire 9 à denture extérieure, engrenant toutes deux avec des satellites 11 supportés, à intervalles angulaires égaux autour de l'axe 12 du dispositif de transmission, par un porte-satellites 13 relié rigidement à l'arbre de sortie 2bc. Les satellites 11 peuvent tourillonner librement autour de tourillons excentrés 14 du porte-satellites 13. La roue planétaire 9 peut tourner librement autour de l'axe 12 du dispositif de transmission par rapport à l'arbre de sortie 2bc qu'elle entoure. Toutefois, un dispositif de roue libre 16 empêche la roue planétaire 9 de tourner en inverse, c'est à dire en sens inverse du sens normal de rotation de l'arbre d'entrée 2ab, par rapport au carter 4 de la transmission.

La couronne 8 est liée en rotation, mais libre en coulissement axial relativement à l'arbre d'entrée 2ab du module, par l'intermédiaire de cannelures 17.

Un embrayage 18b est disposé autour de la couronne 8. Il comprend un empilement de disques annulaires 19 alternant avec des disques annulaires 22. Les disques 19 sont reliés en rotation à la couronne 8 avec possibilité de coulissement axial. Pour cela, les disques 19 ont des dents intérieures engagées dans des cannelures 21 solidaires de la couronne 8. Les disques 22 sont liés en rotation, avec possibilité de coulissement axial, au porte-satellites 13. Pour cela, une cage 20 comporte, sur sa face radialement intérieure, des cannelures 23 dans lesquelles sont engagées de façon axialement coulissante d'une part des dents extérieures des disques 22 et d'autre part des dents extérieures 24 du porte-satellites 13.

L'empilement de disques 19 et 22 peut être serré axialement entre un plateau de retenue 26 solidaire du porte-satellites 13 et un plateau mobile 27 qui est solidaire de la couronne 8. Le plateau 27 est donc mobile axialement avec la couronne 8.

La cage 20 supporte des masselottes centrifuges 29 disposées en couronne autour de l'embrayage 18b.

Les masselottes sont donc liées en rotation à l'arbre de sortie 2bc du module 1b auquel elles appartiennent.

Chaque masselotte a un corps massif 31 situé radialement à l'extérieur des disques 19 et 22 et un bec d'actionnement 32 appuyé contre une face extérieure du plateau fixe 26 par l'intermédiaire d'un ressort belleville 34. Le bec 32 est relié au corps massif 31 par un bras coudé 33 articulé à la cage 20 autour d'un axe géométrique 28 orienté tangentiellement par rapport à l'axe 12 du dispositif. Le WO-A-91/13275 décrit des dispositions avantageuses pour le montage articulé de telles masselottes. Le centre de gravité G de la masselotte est situé à l'intérieur ou au voisinage du corps massif 31, en une position qui présente par rapport à l'axe 28 un certain écartement mesuré parallèlement à l'axe 12 du dispositif.

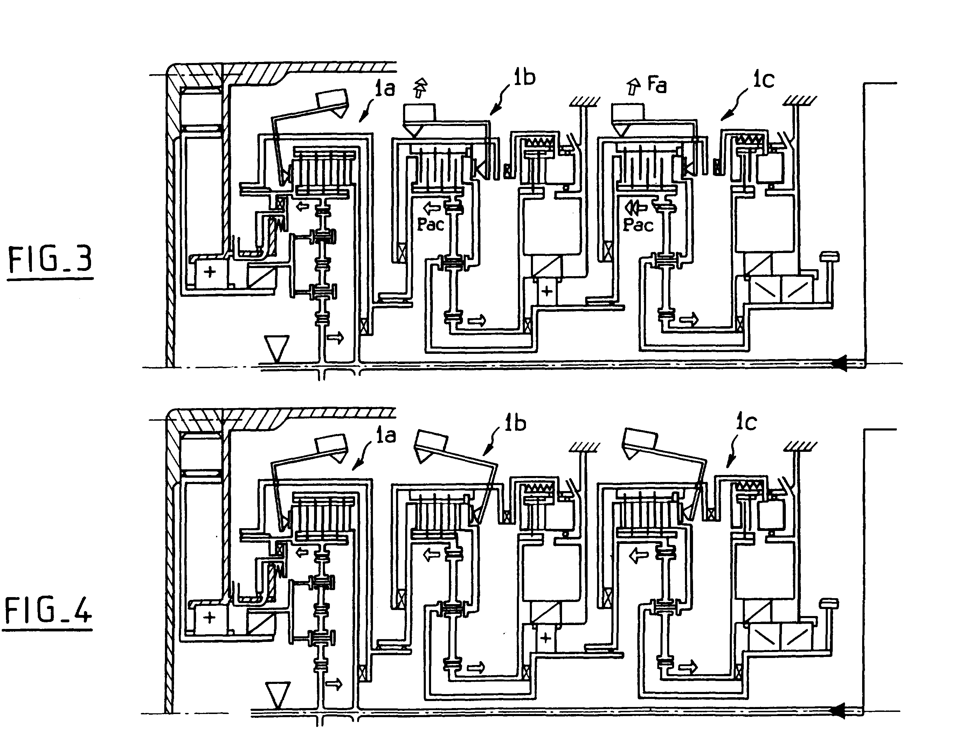

Ainsi, la rotation du porte-satellites 13 tend à faire pivoter radialement vers l'extérieur les corps 31 des masselottes 29 autour de leur axe tangentiel 28 sous l'action de leur force centrifuge Fa, pour les faire passer d'une position de repos définie par une butée 36 contre la cage 20 à une position écartée visible à la figure 4.

Il en résulte alors un déplacement axial relatif entre le bec 32 et l'axe d'articulation 28 de la masselotte, donc entre le bec 32 et la cage 20. Relativement au sens de déplacement correspondant à l'écartement centrifuge des masselottes 29, la cage 20 est appuyée axialement contre la couronne 8, avec liberté de rotation relative, par une butée axiale B2.

Ainsi, le déplacement de la cage 20 par rapport au bec 32 provoque un mouvement de rapprochement relatif entre le bec 32 et le plateau mobile 27 de l'embrayage 18b. Ce déplacement relatif peut correspondre à une compression du ressort belleville 34 et/ou à un déplacement du plateau mobile 27 vers le plateau fixe 26 dans le sens du serrage de l'embrayage 18b.

Lorsque la transmission est au repos comme représenté en haut de la figure 1 et à la figure 2, le ressort belleville 34 transmet à la cage 20, par l'intermédiaire des masselottes 29 en butée au repos, une force qui serre l'embrayage 18b de sorte que l'entrée 2ab du module 1b est couplée en rotation avec la sortie 2bc et le module constitue une prise directe capable de transmettre du couple jusqu'à un certain maximum défini par la force de serrage du ressort belleville.

D'autre part, les dentures de la couronne 8, des satellites 11 et de la roue planétaire 9 sont de type hélicoïdal. Ainsi, dans chaque couple de dentures engrenant sous charge, il apparaît des poussées axiales opposées proportionnelles à la force circonférentielle transmise, donc au couple sur l'arbre d'entrée 2ab et au couple sur l'arbre de sortie 2bc. Le sens d'inclinaison hélicoïdale des dentures est choisi pour que le sens de la poussée axiale Pac prenant naissance dans la couronne 8 lorsqu'elle transmet un couple moteur soit tel que le plateau mobile 27, entraîné axialement par la couronne 8, s'écarte du plateau de retenue 26 de l'embrayage. Les satellites 11, qui engrènent non seulement avec la couronne 8 mais aussi avec la roue planétaire 9, subissent deux réactions axiales opposées PS1 et PS2, qui s'équilibrent, et la roue planétaire 9 subit, Compte-tenu de son engrènement avec les satellites 11, une poussée axiale Pap qui est égale en intensité et opposée à la poussée axiale Pac de la couronne 8. La poussée Pap de la roue planétaire 9 est transmise au carter 4 par l'intermédiaire d'une butée B3, du porte-satellites 13 et du palier 3bc. Ainsi, la poussée axiale Pac s'exerce sur le plateau mobile 27 de l'embrayage et par rapport au carter 4, donc par rapport au plateau de retenue 26 de l'embrayage, et ceci dans le sens tendant à desserrer l'embrayage 18b. Cette force, transmise par la butée B2 à la cage 20, tend aussi à rapprocher l'un de l'autre le bec 32 des masselottes 29 et le plateau de retenue 26, donc à maintenir les masselottes 29 dans leur position de repos et à comprimer le ressort belleville 34.

C'est la situation représentée à la figure 3. En supposant cette situation réalisée, on va maintenant décrire le fonctionnement de base du module 1b. Tant que le couple transmis au module par l'arbre d'entrée 2ab est tel que la poussée axiale Pac dans la couronne 8 suffit pour comprimer le ressort belleville 34 et maintenir les masselottes 29 dans la position de repos représentée à la figure 3, l'écartement entre le plateau de retenue 26 et le plateau mobile 27 de l'embrayage est tel que les disques 19 et 22 glissent les uns contre les autres sans transmettre de couple entre eux. Dans ce cas, le porte-satellites 13 peut tourner à une vitesse différente de celle de l'arbre d'entrée 2ab, et il tend à être immobilisé par la charge que doit entraîner l'arbre de sortie 2bc du module. Il en résulte que les satellites 11 tendent à se comporter en inverseurs de mouvement, c'est à dire à faire tourner la roue planétaire 9 en sens inverse du sens de rotation de la couronne 8. Mais ceci est empêché par la roue libre 16. La roue planétaire 9 est donc immobilisée par la roue libre 16 et le porte-satellites 13 tourne à une vitesse qui est intermédiaire entre la vitesse nulle de la roue planétaire 9 et la vitesse de la couronne 8 et de l'arbre d'entrée 2ab. Le module fonctionne donc en réducteur. Si la vitesse de rotation augmente et que le couple reste inchangé, il arrive un instant où la force centrifuge produit entre le plateau de retenue 26 et le plateau mobile 27 une force axiale de serrage plus grande que la poussée axiale Pac, et le plateau mobile 27 est poussé vers le plateau 26 pour réaliser la prise directe.

Lorsque l'embrayage 18b est serré, les dentures du train épicycloïdal 7 ne travaillent plus, c'est à dire qu'elles ne transmettent plus aucune force et elles ne donnent donc naissance à aucune poussée axiale. Ainsi, la poussée axiale due à la force centrifuge peut s'exercer pleinement pour serrer les plateaux 26 et 27 l'un vers l'autre. On comprend alors mieux le processus de passage en prise directe : dès que les disques 19 et 22 commencent à frotter les uns contre les autres et transmettent une partie de la puissance, les dentures sont déchargées d'autant, la poussée axiale Pac diminue d'autant, et la suprématie de la force centrifuge se confirme de plus en plus jusqu'à ce que l'embrayage 18b assure totalement la prise directe.

Il peut alors arriver que la vitesse de rotation de l'arbre de sortie 2ab diminue, et/ou que le couple à transmettre augmente, au point que les masselottes 29 n'assurent plus dans l'embrayage 18b une force de serrage suffisante pour transmettre le couple. Dans ce cas, l'embrayage 18b commence à patiner. La vitesse de la roue planétaire 9 diminue jusqu'à s'annuler. La roue libre 16 immobilise la roue planétaire et la force de denture Pac réapparaît pour desserrer l'embrayage, de sorte que le module fonctionne ensuite en réducteur. Ainsi, chaque fois qu'un changement entre le fonctionnement en réducteur et le fonctionnement en prise directe s'opère, la force axiale Pac varie dans le sens qui stabilise le rapport de transmission nouvellement institué. Ceci est très avantageux d'une part pour éviter les changements de rapport incessants autour de certains points de fonctionnement critiques, et d'autre part pour que les situations de patinage de l'embrayage 18b ne soient que transitoires.

Le rôle du ressort belleville 34 est double. D'une part, en serrant les embrayages lorsque la transmission est au repos, il réalise un couplage mécanique entre l'entrée et la sortie du module. Cette fonction étant assurée dans les trois modules, le véhicule à l'arrêt est retenu par le moteur lorsque celui-ci est lui-même à l'arrêt. Si l'embrayage 18b était desserré au repos, le véhicule ne serait pas empêché de rouler librement en marche avant car dans ce cas l'immobilisation de la couronne 8 par le moteur 5 ferait tourner la roue planétaire 9 en sens normal, ce que la roue libre 16 n'empêche pas.

D'autre part, le ressort belleville 34 permet au module de fonctionner en prise directe pour des vitesses, relativement basses, où la force centrifuge, proportionnelle au carré de la vitesse, serait si faible que le moindre couple à transmettre provoquerait, de manière non souhaitable en pratique, un maintien ou une tendance au retour au fonctionnement en réducteur.

On va maintenant exposer les différences présentées par le module la par rapport au module 1b.

L'utilisation d'un train épicycloïdal avec l'entrée sur la couronne et la sortie sur le porte-satellites ne permet guère de réaliser des rapports de réduction supérieurs à 1,4. Avec un tel rapport, la réduction de la vitesse du moteur lors du passage en 2ème vitesse serait de 40 %. Ceci est un peu faible pour le passage de première en deuxième vitesse. Si l'on fait l'entrée par le planétaire et la sortie par le porte-satellites, le rapport de réduction est en pratique au minimum de 3, ce qui est trop. On peut par contre réaliser pratiquement n'importe quel rapport de réduction en entrant par le planétaire et en sortant par la couronne, mais dans ce cas la couronne tourne en sens contraire du planétaire, ce qui est un inconvénient rédhibitoire puisque le sens de rotation de la couronne ne serait pas le même pour le fonctionnement du module en prise directe et son fonctionnement en réducteur.

Pour résoudre simultanément toutes ces difficultés, le module la a son arbre d'entrée 2a relié à la roue planétaire 9a, son arbre de sortie 2ab entraîné par la couronne 8a, et pour que le sens de rotation de la couronne 8a soit le même que celui de la roue planétaire 9a même lors du fonctionnement en réducteur, chaque satellite est remplcé par une cascade de deux satellites lla engrenant ensemble et engrenant l'un avec la roue planétaire 9a et l'autre avec la couronne 8a. Le porte-satellites 13a est relié au moyeu 111 par une roue libre 16a.

Le moyeu 111 est solidaire du rotor 37 d'un frein de démarrage 38.

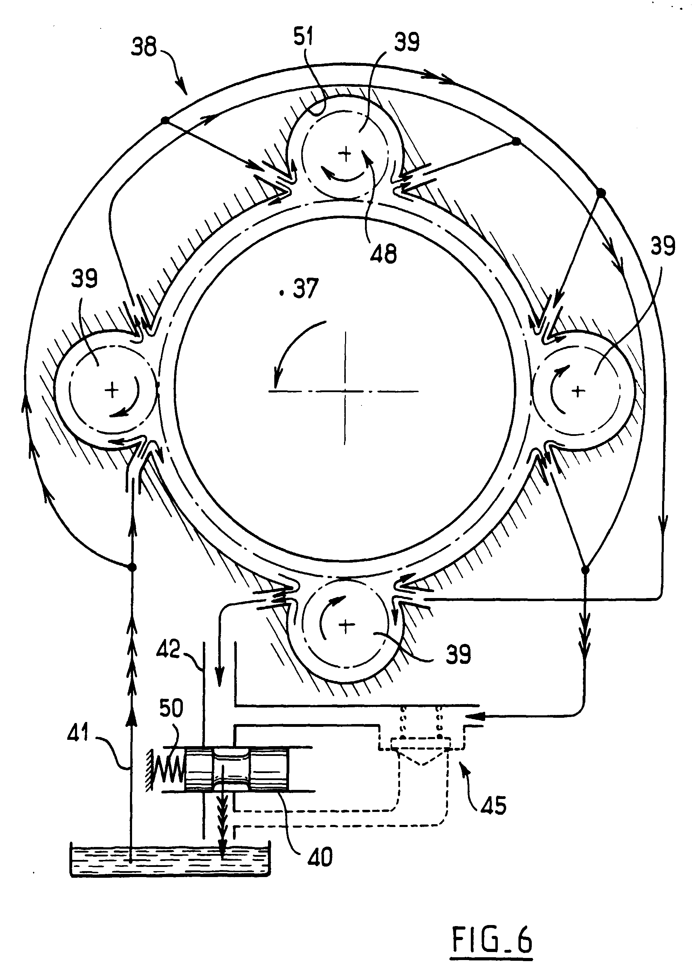

Comme le montre également la figure 6, le frein 38 est constitué par une pompe à engrenages dont le rotor 37 constitue une roue planétaire menante entraînant quatre satellites de pompage 39 qui sont hydrauliquement en parallèle les uns avec les autres entre une aspiration 41 et un refoulement 42 qui peuvent être tous deux reliés à une réserve d'huile de lubrification de 1a. transmission. Une vanne 40 est montée dans le conduit de refoulement 42 pour sélectivement permettre ou empêcher le flux d'huile à travers la pompe, ou encore créer une perte de charge réglable à la sortie de la pompe. Lorsque la vanne 40 est fermée, l'huile, empêchée de circuler, bloque la pompe, de sorte que le rotor 37 ne peut plus tourner et la roue libre 16a ne permet au porte-satellites 13a que de tourner dans le sens normal. Si au contraire la vanne 40 est ouverte, le rotor 37 tourne librement. Dans ce cas, le porte-satellites 13a peut tourner en inverse en entraînant le moyeu 111 avec lui par la roue libre 16a, ce qui provoque le pompage dans le sens représenté à la figure 6. On provoque l'ouverture de la vanne 40 pour réaliser automatiquement une condition de point mort, c'est à dire de désaccouplement entre les arbres d'entrée 2a et de sortie 2c lorsque le véhicule est à l'arrêt (arbre de sortie 2c immobile) alors que l'arbre d'entrée 2a tourne. C'est grâce à cette fonction que l'on peut supprimer l'embrayage ou le convertisseur de couple traditionnellement monté entre le moteur 5 et la transmission. Pour provoquer la mise en mouvement progressive de l'arbre de sortie 2c, on ferme progressivement la vanne 40 pour freiner progressivement le rotor 37 au moyen d'une perte de charge croissante à travers la vanne 40.

En variante, on peut prévoir de monter en parallèle avec la vanne 40 un clapet anti-retour 45 permettant à l'huile de contourner la vanne 40 si elle tend à circuler en sens inverse de celui représenté à la figure 6, c'est à dire si l'huile tend à être aspirée à travers le refoulement 42, et refoulée à travers l'aspiration 41. Grâce à ce clapet anti-retour 45, il est possible de supprimer la roue libre 16a, la fonction de roue libre étant assurée hydrauliquement par le clapet anti-retour 45. Cette solution supprime l'encombrement, relativement important, d'une roue libre, mais introduit une perte par frottement hydraulique lorsque le module la fonctionne en prise directe, situation dans laquelle le porte-satellites 13a tourne dans le sens normal à la même vitesse que l'arbre d'entrée 2a.

Comme le montre encore la figure 2, la pompe hydraulique matérialisant le frein 38 est réalisée de manière particulièrement simple : chaque satellite 39 est simplement enfermé dans une alvéole 48 d'un couvercle 49 fixé contre l'extrémité du carter 4 opposée au moteur 5. La surface périphérique 51 des alvéoles est en contact d'étanchéité avec les sommets des dents des satellites 39 et la surface de fond 52 des alvéoles 48 ainsi que la face terminale extérieure 53 du carter 4 sont en contact d'étanchéité avec les deux faces radiales de chaque satellites 39. En outre, le rotor 37 comprend, de part et d'autre de sa denture, deux faces annulaires 54 et 56, opposées, qui sont en contact d'étanchéité l'une avec le fond intérieur du couvercle 49 et l'autre avec la face extérieure 53 du carter 4. Ce sont les différents contacts d'étanchéité des sommets de dents des satellites et des faces radiales des satellites avec le couvercle 49 et le carter 4 qui assurent en même temps le guidage en rotation des satellites.

La cage 20a pour les masselottes 29 du module 1a est, comme dans les autres modules 1b et 1c, solidaire en rotation de l'arbre de sortie 2ab du module, mais elle en est aussi solidaire axialement. La cage 20a, et avec elle les axes 28 des masselottes 29, n'ont donc pas de mobilité axiale.

Par contre, les becs 32 des masselottes 29 s'appuient non plus sur le plateau de retenue 26, mais sur le plateau mobile 27 de l'embrayage 18a, toujours par l'intermédiaire d'un ressort belleville 34. Le. plateau mobile 27 est comme dans les autres modules solidaire de la couronne 8a, qui est mobile axialement grâce à des cannelures 17a par rapport à la cage 20a liée en rotation à l'arbre de sortie 2ab. Le plateau de retenue 26 est solidaire de l'arbre d'entrée 2a.

Le fonctionnement du module 1a est similaire à celui des modules 1b et 1c. Les masselottes ou le ressort belleville 34 tendent à serrer l'embrayage 18a avec une force qui détermine le couple maximum transmissible, et lors du fonctionnement en réducteur la force axiale de denture hélicoïdale de la couronne 8a, pousse le plateau mobile 27 dans le sens desserrant l'embrayage.

On va maintenant expliquer le fonctionnement général des trois modules 1a, 1b, 1c.

Si l'on considère le cas où tous les modules 1a-1c fonctionnent en réducteur (partie inférieure de la figure 1), ce qui réalise le premier rapport du dispositif de transmission, c'est dans le module la que la vitesse est la plus forte et le couple est le plus faible, comme cela est illustré par une triple flèche Fa et une simple flèche Pac. C'est donc ce premier module 1a qui passe le premier en prise directe lorsque le véhicule accélère, comme représenté à la figure 3. Le couple diminue dans le second module 1b, car il n'est plus augmenté par la démultiplication dans le premier module, mais les vitesses de rotation dans le second module restent inchangées, donc inférieures à celles dans le premier module juste avant le changement, car elles sont déterminées par la vitesse de rotation des roues du véhicule. Il faut donc que la vitesse du véhicule augmente encore pour que le second module atteigne à son tour les conditions de passage en prise directe si le couple fourni par le moteur demeure inchangé. Et ainsi de suite jusqu'à ce que tous les modules du dispositif de transmission soient en prise directe comme représenté à la figure 4. Ainsi, des modules, tous essentiellement identiques, s'organisent spontanément pour réaliser un passage échelonné des rapports de vitesse. Les différences qu'on a décrites à propos du module 1a sont sans incidence à cet égard.

Pour que, parmi les modules qui fonctionnent en prise directe dans une situation donnée, celui qui rétrograde soit toujours celui qui est le plus proche fonctionnellement de l'arbre de sortie 2c, on peut prévoir que les modules ont d'autant moins de masselottes, ou des masselottes d'autant plus légères, ou encore d'autant moins de disques dans leur embrayage, qu'ils sont plus proches fonctionnellement de la sortie. Mais il s'agit simplement de nuancer la réponse au couple transmis, avec des variations de quelques % d'un module au voisin.

On va maintenant décrire en référence à la figure 2 et à propos du module 1b des moyens complémentaires prévus dans les modules 1b et lc pour les faire fonctionner sélectivement en réducteur dans des conditions différentes de celles déterminées par les forces axiales du ressort belleville 34, des masselottes centrifuges 29 et de denture de la couronne 8.

Pour cela, le module 1b comprend un frein 43 qui permet d'immobiliser la roue planétaire 9 relativement au carter 4 indépendamment de la roue libre 16. En d'autre termes, le frein 43 est monté fonctionnellement en parallèle avec la roue libre 16 entre la roue planétaire 9 et le carter 4. Un piston hydraulique 44 est monté axialement coulissant pour sélectivement serrer et desserrer le frein 43. Le frein 43 et le piston 44 ont une forme annulaire ayant pour axe l'axe 12 de la transmission. Le piston 44 est adjacent à une chambre hydraulique 46b qui peut être sélectivement alimentée en huile sous pression pour solliciter le piston 44 dans le sens du serrage du frein 43, à l'encontre de l'action d'un ressort de rappel 55.

De plus, le piston 44 est relié rigidement à un poussoir 47 qui peut s'appuyer contre la cage 20 au moyen d'une butée axiale B₄. Le montage est tel que lorsque ia pression régnant dans la chambre 46b pousse le piston 44 dans la position de serrage du frein 43, la cage 20, avant que le frein 43 ne soit serré, est repoussée de manière suffisante pour que l'embrayage 18b soit relâché.

Ainsi, lorsque le piston 44 est dans la position de serrage du frein, la roue planétaire 9 est immobilisée même si le porte-satellites 13 tend à tourner plus vite que la couronne 8, comme c'est le cas lors du fonctionnement en retenue, et par conséquent le module fonctionne en réducteur, comme le permet le desserrage de l'embrayage 18b.

L'ensemble 43, 44, 46b, 47 qui vient d'être décrit constitue donc un moyen qui peut être mis à la disposition du conducteur du véhicule pour obliger le module à fonctionner en réducteur lorsqu'il souhaite augmenter l'effet de frein moteur, par exemple en descente.

On a vu plus haut que les ressorts belleville 34 placent tous les modules en prise directe lorsque le véhicule est à l'arrêt. Au démarrage, il faudrait donc que l'apparition des forces de denture Pac fasse passer tous les modules au fonctionnement en réducteur pour que le démarrage s'effectue ensuite sous le premier rapport. Ceci peut créer systématiquement une secousse désagréable. Pour éviter cela, il est prévu que l'ensemble frein 43 piston 44 et poussoir 47 place le module 1b dans son état "réducteur" lorsque le moteur tourne mais que la mise en mouvement de l'arbre de sortie 2c n'a pas encore eu lieu, de façon que la transmission opère selon son premier rapport de transmission dès le début de la mise en mouvement de l'arbre de sortie 2c.

Pour alimenter la chambre hydraulique 46b en vue des fonctions qui viennent d'être décrites, on peut utiliser une pression hydraulique choisie suffisamment élevée pour surmonter de manière certaine la force axiale produite en sens contraire par les masselottes 29, quelle que soit la vitesse de rotation des masselottes autour de l'axe 12.

Mais pour des raisons de sécurité on peut également choisir de ne fournir à la chambre hydraulique 46b qu'une pression limitée à une valeur telle que la force axiale du piston 44 ne surmonte la force contraire des masselottes 29 que si la vitesse de rotation des masselottes est suffisamment faible pour que le passage au fonctionnement en réducteur n'entraîne pas de survitesse du moteur 5.

On peut également appliquer dans la chambre hydraulique 46b, lorsque le conducteur désire une conduite sportive favorisant les vitesses de rotation élevées de l'arbre d'entrée 2a, une pression constante modérée qui va produire, sur la cage 20, une force se soustrayant à la force de serrage produite par les masselottes. Ainsi, le couple transmissible en prise directe pour une vitesse de rotation donnée des masselottes, est moindre, et la vitesse au-dessus de laquelle la transmission fonctionnant en réducteur repasse au fonctionnement en prise directe pour un couple donné est plus grande.

On peut encore utiliser le piston 44 pour accélérer la transition entre le fonctionnement en prise directe et le fonctionnement en réducteur. Lorsque le conducteur demande brusquement la pleine puissance du moteur, cela est détecté et une impulsion de pression, durant par exemple une ou deux seconde, est envoyée dans la chambre 46b. Cette imupulsion desserre l'embrayage 18b instantanément, de sorte que le fonctionnement en réducteur est aussitôt établi. Lorsque la pression dans la chambre 46b disparaît, le module ne repasse pas au fonctionnement en prise directe car le fonctionnement en réducteur avec une forte puissance à transmettre a fait apparaître une forte poussée axiale de denture Pac qui maintient le fonctionnement en réducteur. Autrement dit, comme la force de denture varie systématiquement dans le sens qui stabilise le rapport de transmission nouvellement institué, il suffit de n'appliquer qu'une impulsion de force dans le sens du changement souhaité, puis de laisser à nouveau les forces internes du module régir le comportement de ce dernier. Là encore, on peut faire en sorte que l'impulsion de pression ne puisse vaincre la force des masselottes que si la vitesse de la sortie est inférieure à un certain seuil.

Le module 1c possède un frein 43, un piston 44 , une chambre 46c et un poussoir 47 ainsi qu'une butée B4, identiques à ceux du module 1b.

Par contre, le module 1a est différent. Il comporte bien un piston 44a adjacent à une chambre hydraulique 46a, mais aucun frein tel que 43 n'est prévu en parallèle avec la roue libre 16a, et d'autre part le piston 44 agit par une butée B5 non pas sur la cage 20a qui est axialement immobile, mais sur la couronne 8a et le plateau mobile 27 de l'embrayage 18a dans le sens du desserrage de l'embrayage 18a. Ce montage a simplement pour but de permettre de desserrer l'embrayage 18a lorsque le véhicule est à l'arrêt mais que l'arbre 2a est déjà en rotation, comme cela est permis si la vanne 40 est en position d'ouverture. Le piston 44a est également utilisable pour favoriser le fonctionnement en réducteur pour une conduite dite "sportive" ou pour envoyer une impulsion de pression lorsque le conducteur enfonce complètement la pédale d'accélérateur comme cela a été décrit plus haut. Par contre, le piston 44a n'est pas utilisable pour réaliser un fonctionnement en réducteur lorsque le moteur fonctionne en retenue. Il a en effet été estimé inutile en pratique de créer la possibilité d'un fonctionnement en retenue sur le premier rapport de la transmission.

On va maintenant revenir en référence aux figures 1 et 3 à 5 aux différents états de la transmission dans son ensemble.

A la figure 1, partie supérieure, la transmission est au repos en prise directe car tous les embrayages 18a, 18b sont serrés et le frein de démarrage 38 est bloqué car la vanne 40 est ramenée en position de fermeture par son ressort de rappel 50. Les pistons 44 et 44a sont poussés vers leur position inactive sous l'action des ressorts de rappel 55.

Dans la situation représentée en bas de la figure 1, on a représenté la vanne 40 en position d'ouverture de façon à libérer le rotor 37. On a également représenté les chambres hydrauliques 46a, 46b, 46c alimentées de façon à desserrer les embrayages 18a, 18b et 18c en comprimant les ressorts belleville 34 correspondants, ainsi que les ressorts de rappel 55 des pistons. C'est la situation lorsque le moteur 5 fonctionne, par exemple au ralenti, alors que l'arbre de sortie 2c est immobile (véhicule à l'arrêt). Le dispositif de démarrage 38 permet alors à l'arbre d'entrée 2a de tourner sans qu'il y ait rotation de l'arbre de sortie 2ab du module la, et sans auncune rotation dans les deux autres modules 1b, 1c. C'est le porte-satellites 13a et le moyeu 111 qui tournent en sens inverse de la normale pour permettre cette situation. A ce stade, le rotor 37 ajoute son effet d'inertie à celui du volant d'inertie traditionnel du moteur thermique 5. Ceci est très avantageux car le volant d'inertie d'un moteur thermique est surtout utile lors du fonctionnement au ralenti pour éviter que le moteur, non relié à une charge inertielle, soit incapable de poursuivre sa rotation lorsqu'un piston du moteur thermique arrive en fin de compression des gaz. Au contraire, lors du fonctionnement normal, le volant d'inertie du moteur thermique traditionnel grève les performances d'accélération du véhicule. Avec le rotor 37 ne tournant que lorsque le véhicule est à l'arrêt, d'une part une même stabilisation de ralenti est obtenue avec un volant d'inertie plus petit sur le moteur 5, et en plus l'inertie du rotor 37 disparaît lors du fonctionnement normal puisque le rotor 37 est alors arrêté.

Pour passer du fonctionnement en point mort correspondant à la situation qui vient d'être décrite pour la bas de la figure 1, à la situation de fonctionnement selon le premier rapport de transmission, on ferme progressivement la vanne 40 pour mettre progressivement en mouvement de rotation l'arbre de sortie 2ab du premier module et le mouvement est transmis en étant réduit de vitesse dans chaque module jusqu'à l'arbre de sortie 2c. Dès que le véhicule a atteint une certaine vitesse par exemple égale à cinq kilomètres/heure, on peut relâcher la pression dans les chambres hydrauliques 46a, 46b et 46c pour permettre aux forces de dentures Pac, aux forces centrifuges Fa et aux forces élastiques des ressorts 34 de jouer leur rôle de pilotage automatique de l'ensemble, comme décrit plus haut.

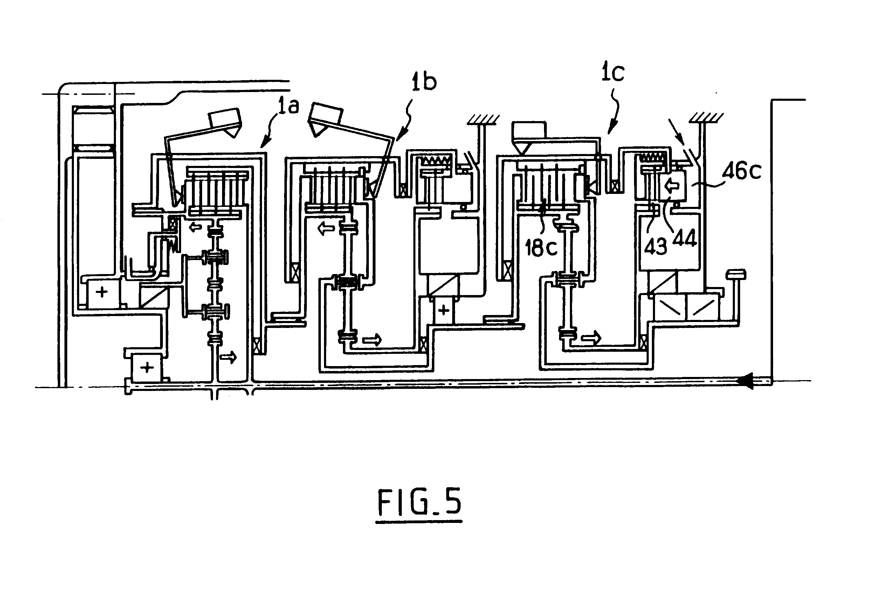

La figure 5 montre que, à partir de la situation de prise directe de l'ensemble de la transmission, la chambre hydraulique 46c du module 1c a été alimentée pour activer le frein 43 et en même temps ramener l'embrayage 18c de ce module à l'état desserré. Ainsi, le piston 44 de ce module oblige celui-ci à fonctionner en réducteur, soit pour créer un effet de frein moteur accru, soit pour initier rapidement le retour au fonctionnement en réducteur en vue d'une forte accélération.

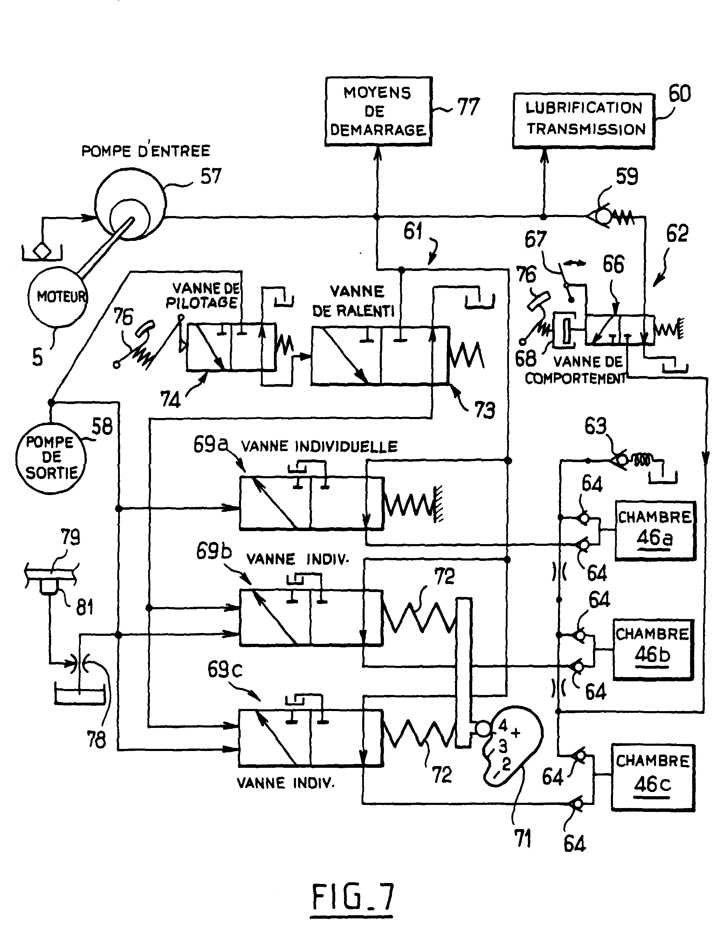

On va maintenant décrire en référence à la figure 7 un schéma hydraulique pour la commande de la pression hydraulique dans les chambres 46a, 46b et 46c de commande des pistons 44 et 44a.

De manière non représentée aux figures 1 à 5, il est prévu à l'entrée de la transmission une pompe hydraulique d'entrée 57 entraînée par l'arbre 2a et tournant donc à la vitesse du moteur 5, et à la sortie de la transmission ou en aval de cette sortie une pompe hydraulique de sortie 58. La pompe 57 est conçue pour délivrer une pression qui est constante quelle que soit la vitesse de rotation du moteur, par exemple une pression de 200kPa définie par un clapet de décharge 59. Au contraire, la pompe de sortie 58 est conçue en pompe tachymétrique pour délivrer une pression constituant une mesure de la vitesse de la sortie de la transmission, autrement dit une mesure de la vitesse du véhicule.

En amont du clapet de décharge 59, la pompe d'entrée alimente une branche moyenne pression 61, pouvant notamment être reliée à un circuit de lubrification 60 de la transmission. En aval du clapet 59, la pompe d'entrée alimente une branche basse pression 62, dans laquelle la pression est fixée par exemple à 100kPa par un clapet de décharge terminal 63. Chaque chambre hydraulique 46a, 46b et 46c peut être alimentée par l'une ou l'autre des deux branches 61, 62 grâce à des clapets d'entrée 64 qui envoient systématiquement la plus forte des deux pressions qu'ils reçoivent dans la chambre qui leur est associée, tout en empêchant cette pression de passer dans l'autre branche. L'alimentation de la branche basse pression 62 est commandée par une vanne de comportement 66 qui, lorsqu'elle est en position d'ouverture, applique aux chambres 46a, b, c une pression favorisant le fonctionnement des modules en réducteur. Cette pression peut être appliquée soit de manière permanente lorsqu'une commande manuelle 67 est actionnée, soit de manière brève, sous forme d'impulsions d'une à deux secondes, au moyen d'un amortisseur 68 qui est sollicité lorsque la pédale d'accélérateur est complètement enfoncée.

L'envoi de la moyenne pression provenant de la branche 61 est décidé individuellement pour chaque chambre 46a, 46b, ou 46c par une vanne individuelle respective 69a, 69b ou 69c. Lorsque les vannes 69a, 69b et 69c sont au repos, les chambres correspondantes 46a, 46b et 46c sont alimentées par la moyenne pression, de sorte que les modules correspondants fonctionnent ou sont prêts à fonctionner en réducteur. La pression de la pompe de sortie 58 est appliquée à chaque vanne individuelle pour tendre à faire passer celle-ci en position de fermeture. Pour la vanne individuelle 69a correspondant au premier module la, celle-ci passe en position de fermeture lorsque la vitesse du véhicule est d'environ 5 km/h.

Les deux autres vannes 69b et 69c passent en position de fermeture respectivement lorsque la vitesse du véhicule est supérieure à 30 et 50 km/h et qu'une came 71, mobile entre trois positions repérées "4", "3" et "2", est sur la position "4". Lorsque la came, commandée par un sélecteur manuel, est sur la position "3", et encore plus lorsqu'elle est sur la position "2", des ressorts de rappel 72 des vannes individuelles 69b et 69c sont davantage comprimés pour augmenter la force de rappel vers la position d'ouverture, de sorte que les vitesses de véhicule nécessaires pour faire passer les vannes individuelles en position de fermeture sont plus élevées.

En outre, les vannes individuelles 69b et 69c reçoivent sélectivement, dans le sens de leur passage en position de fermeture, donc en plus de la pression correspondant à la vitesse du véhicule, la moyenne pression de la branche 61. Pour cela, il faut qu'une vanne de ralenti 73, normalement en position de fermeture, soit poussée en position d'ouverture par la pression de la pompe de sortie 58. La pression de la pompe 58 est appliquée à la vanne de ralenti 73 lorsqu'une vanne de pilotage 74 est elle-même en position d'ouverture. La vanne de pilotage 74 s'ouvre lorsque la pédale d'accélérateur 76 du véhicule est actionnée.

On va maintenant décrire le fonctionnement du circuit hydraulique de la figure 7.

Lorsque le véhicule est à l'arrêt et que la pédale d'accélérateur 76 est relâchée, le moteur tournant au ralenti, la vanne de pilotage 74 est en position de fermeture et la pression produite par la pompe de sortie 58 est nulle, de sorte que les trois vannes individuelles sont au repos, donc les trois chambres 46a, 46b, 46c sont alimentées et les trois modules sont prêts à fonctionner en réducteur.

Des moyens 77, pouvant puiser leur énergie dans le circuit moyenne pression 61 de la pompe d'entrée 57, peuvent être mis en action pour fermer progressivement la vanne 40 du frein du démarrage 38.

Lorsque la vitesse du véhicule atteint environ 5 km/h, la vanne 69a se ferme, de sorte que la chambre 46a n'est plus sous pression (on suppose à ce stade que la vanne de comportement 66 est fermée).

En outre, la mise en mouvement du véhicule a nécessité d'actionner la pédale d'accélérateur 76, de sorte que la vanne de pilotage 74 a permis à la pression naissante dans le circuit de refoulement de la pompe de sortie 58 de venir pousser la vanne de ralenti 73 en position d'ouverture. Ceci a permis à la moyenne pression de la branche 61 de pousser les deux autres vannes individuelles 69b et 69c en position de fermeture pour décharger les chambres 46b et 46c.

Autrement dit, dès que le démarrage du véhicule a eu lieu et tant que la pédale d'accélérateur 76 est actionnée, le chambres 46a à 46c sont hors pression et laissent les forces produites par les ressorts belleville 34, les masselottes 29 et les dentures hélicoïdales gérer les changements de rapport sans influence extérieure.

A partir d'une certaine vitesse du véhicule, si le conducteur relâche la pédale d'accélérateur 76, la vanne de ralenti se ferme et la position des vannes individuelles 69b et 69c est régie par la pression produite par la pompe de sortie 58. C'est à dire que lorsque la vitesse du véhicule tombe en dessous de 50 km/h, la transmission initialement en prise directe rétrograde automatiquement en troisième vitesse, puis en deuxième vitesse lorsque la vitesse franchit le seuil de 30 km/h dans le sens descendant.

Ces seuils sont augmentés lorsque la came 71 est sur la position "3", et encore davantage augmentés lorsque la came est sur la position "2". Grâce à la came 71, le conducteur du véhicule peut donc produire un effet de frein moteur accru, par exemple lorsqu'il circule sur une route descendante.

Selon un perfectionnement représenté à la figure 7, on peut également prévoir que les seuils sont accrus lorsque le conducteur actionne les freins du véhicule. Pour cela, la pompe de sortie 58 débite à travers une vanne de détente 78 qui est réglée automatiquement de manière à se fermer d'autant plus que la pression dans le circuit hydraulique de freinage 79 est importante. Pour cela, un capteur de pression 81 monté sur le circuit de freinage, fournit un signal électrique qui commande la vanne 78. Plus la vanne 78 est fermée, plus la pression dans le circuit de refoulement de la pompe de sortie 58 augmente pour une vitesse donnée du véhicule.

Si le conducteur actionne l'accélérateur 76 alors que le véhicule est à l'arrêt, la vanne de pilotage s'ouvre mais la pression fournie par la pompe de sortie 58 est nulle, par conséquent la vanne de ralenti reste en position de fermeture.

Ainsi, les vannes individuelles ne sont en position d'ouverture que lorsque le véhicule est à l'arrêt d'une part ou lorsque l'accélérateur 76 est relâché et que la vitesse du véhicule est inférieure à certains seuils. Lorsque les vannes individuelles sont en position d'ouverture, leur sortie est nécessairement en communication avec les chambres correpsondantes 46a, 46b et 46c. Lorsqu'elles sont en position de fermeture et que la vanne de comportement 66 est en position d'ouverture, les chambres 46a, 46b et 46c sont alimentées avec la basse pression comme il a été décrit plus haut pour modifier le comportement de la transmission lorsque la pédale d'accélérateur 76 est actionnée. A la figure 7, on a représenté deux fois la pédale d'accélérateur 76 au voisinage des vannes 66 et 74 respectivement, mais il s'agit bien entendu en réalité d'une seule et même pédale.

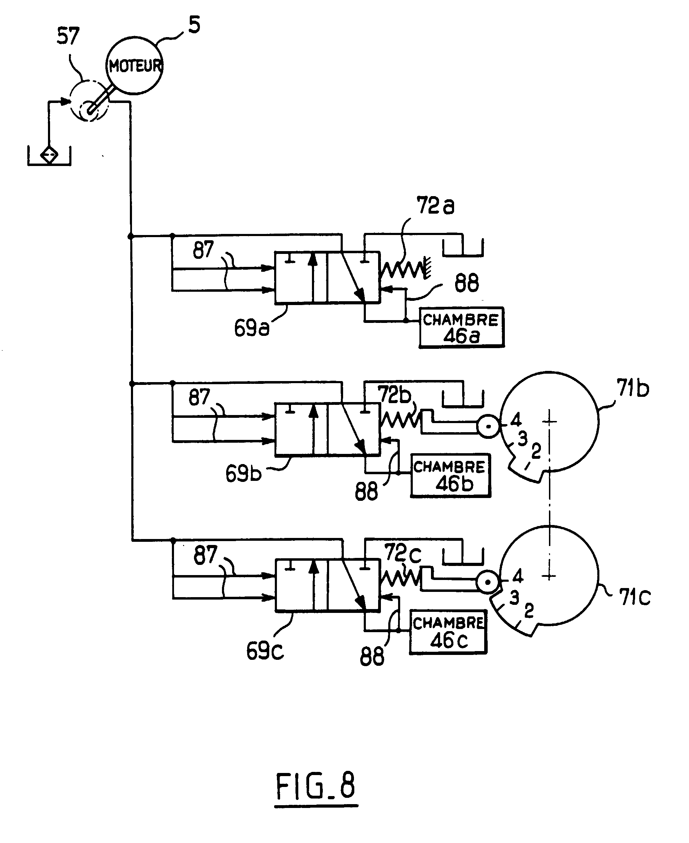

L'exemple représenté à la figure 8 correspond à une version simplifiée qui ne sera décrite que pour ses différences par rapport à la figure 7.

Il n'y a plus de pompe de sortie, ni de vanne de pilotage, ni de vanne de ralenti.

La pompe d'entrée 57 est conçue en pompe tachymétrique pour délivrer une pression qui augmente progressivement jusqu'à par exemple 2.000 t/mn, puis qui est ensuite constante.

Cette pression est seule appliquée à l'entrée de commande des trois vannes individuelles 69a, 69b et 69c, sur une aire relativement grande, ce qui est symbolisé par une double flèche 87. En outre, la pression produite par la pompe 57 est appliquée aux chambres 46a, 46b et 46c par les vannes individuelles 69a, 69b et 69c lorsque celles-ci sont maintenues en position d'ouverture par leur ressort de rappel 72a, 72b et 72c, qui ont une raideur croissant dans cet ordre.

Quand une chambre 46a, 46b ou 46c est sous pression, un conduit ou passage de stabilisation d'état 88 applique la pression de la pompe 57 sur une aire relativement faible (simple flèche), sur le côté de la vanne individuelle correspondante 69a, 69b ou 69c pour que cette pression agisse dans le même sens que le ressort 72a, 72b, 72c. La came 71 est remplacée par deux cames 71b et 71c solidaires l'une de l'autre. Dans la position "3", la came 71c comprime le ressort 72c pour que la force élastique surpasse la force maximale produite en sens contraire par la pompe 57, et donc empêche le fonctionnement en prise directe. Dans la position "2", il y a en outre la came 71b qui comprime le ressort 72b de façon à empêcher le passage du 3ème rapport de transmission.

Lorsque les cames 71b et 71c sont dans la position "4" et que le moteur fonctionne au ralenti, les trois vannes individuelles 69a, 69b et 69c sont ouvertes, de sorte que les trois modules fonctionnent en réducteur. Dès que la vitesse de rotation du moteur atteint par exemple 1.400 tours par minute, la vanne 69a du premier module se ferme et autorise le passage au deuxième rapport, dans les conditions définies par les forces de denture, les ressorts belleville 34 et les masselottes centrifuges 29. Dès que la vitesse de rotation du moteur atteint 1.600 t/mn puis 1.800 t/mn, la vanne individuelle 69b autorise le passage au troisième rapport puis, respectivement, la vanne individuelle 69c autorise à son tour le passage en prise directe. Chaque fois qu'une vanne se ferme, le conduit de stabilisation d'état 88 est déchargé, ce qui stabilise l'état de fermeture.

Lors du fonctionnement en retenue, à partir de la prise directe (4ème rapport), dès que la vitesse de rotation du moteur devient inférieure à par exemple 1.300 t/mn, nouveau seuil défini par le déchargement du conduit de stabilisation d'état 88 de la vanne 69c, la vanne 69c s'ouvre et le troisième module repasse au fonctionnement en réducteur. Cet état sera conservé tant que la vitesse de rotation du moteur sera inférieure à 1.800t/mn puisque l'ouverture de la vanne 69c a remis en charge le conduit 88.

Un processus similaire peut provoquer le passage du 3ème au 2ème rapport grâce à la vanne individuelle 69b.

Dans l'exemple représenté à la figure 9 qui ne sera décrit que pour ses différences par rapport à celui de la figure 2, le frein 38 est non plus une pompe hydraulique mais un frein à disque. Le rotor 37 du frein est un disque solidaire du moyeu 111. Le disque 37 coopère avec des mâchoires 82 portées par le carter 4, donc empêchées de tourner autour de l'axe 12. Un ressort 83 tend en permance à serrer les mâchoires 82 donc à immobiliser le moyeu 111. Dans ce cas la roue libre 16a ne permet au porte-satellites 13a que de tourner dans le sens normal. Un vérin hydraulique 84 peut être alimenté pour écarter les mâchoires à l'encontre de la force du ressort. Dans ce cas, le porte-satellites 13a peut tourner en inverse en entraînant le moyeu 111 avec lui par la roue libre 16a, de façon à réaliser la condition de point mort.

Pour mettre progressivement le véhicule en mouvement, on relâche progressivement la pression dans le vérin 84.

Le frein de démarrage 38 est monté à l'extérieur, à l'extrémité libre (opposée au moteur 5) du carter 4, de sorte qu'au besoin les garnitures de friction des mâchoires 82 peuvent être changées par une opération d'entretien très simple.

Cette disposition est permise, dans l'exemple, par le fait que le premier module la est reporté du côté de l'extrémité libre du carter 4 au lieu d'être du côté du moteur, et aussi au fait que la sortie 2ab du premier module 1a est reliée à la couronne 8a de son train épicycloïdal. On voit en effet que si la couronne 8a avait été reliée à l'entrée (2a) du module la (comme c'est le cas dans les modules 1b et 1c), il y aurait eu du côté du train épicycloïdal 7a opposé au moteur 5, un flasque radial reliant l'arbre 2a et la couronne 8a, et ce flasque aurait empêché, de ce côté-ci du train épicycloïdal, toute liaison directe entre le porte-satellites et l'extérieur du carter. La disposition particulière du train planétaire 7a du premier module la a donc le double avantage de donner un meilleur échelonnement entre le 1er et le 2ème rapport de transmission, comme exposé plus haut, et de permettre de ramener à l'extérieur du carter 4 le dispositif de démarrage 38. Bien entendu les paliers 3a et 3ab sont associés à des moyens d'étanchéité convenables.

Selon un autre exemple, comme le montre la figure 10, il serait encore possible de prévoir un embrayage traditionnel 86 entre la sortie du moteur 5 et l'arbre d'entrée 2a de la transmission. Dans ce cas, le frein 38 est supprimé et le moyeu 111 est relié de manière permanente au carter 4.

Bien entendu, l'invention n'est pas limitée aux exemples décrits et représentés.

Les forces appliquées pour corriger le fonctionnement automatique des modules peuvent être d'une nature autre qu'hydraulique, par exemple élastique.

La transmission n'est pas nécessairement agencée en modules successifs.

## Revendications

1. Dispositif de transmission comprenant une combinaison d'éléments rotatifs portant des dentures interengrenées (7), un moyen d'accouplement sélectif (18a, 18b), attaqué par des moyens de sollicitation antagonistes (29, 34) produisant des forces dont une au moins (Fa, Pac) varie de manière monotone en fonction d'au moins un paramètre de fonctionnement du dispositif de transmission et une roue libre (16) montée pour activer sélectivement l'un des éléments rotatifs (9) lorsque le moyen d'accouplement sélectif (18a, 18b) est dans un état désaccouplé, la combinaison d'éléments rotatifs réalisant deux rapports de transmission différents selon que le moyen d'accouplement sélectif est à l'état désaccouplé ou respectivement dans un état accouplé, le dispositif comprenant en outre des moyens de sollicitation supplémentaire (44, 46, 47) pour appliquer sélectivement au moyen d'accouplement (18a, 18b) une force supplémentaire favorisant l'un prédéterminé des états accouplé et désaccouplé du moyen d'accouplement sélectif et en conséquence l'établissement du rapport de transmission correspondant dans le dispositif de transmission, et des moyens d'activation (43) pour, indépendamment de la roue libre (16), placer l'élément rotatif (9) associé à la roue libre dans un état d'activation correspondant au rapport de transmission favorisé par la force supplémentaire, caractérisé en ce que les moyens d'activation (43) sont conjugués mécaniquement avec les moyens de sollicitation supplémentaire (44, 46, 47) pour réaliser ledit état d'activation lorsque les moyens de sollicitation supplémentaire (44, 46, 47) maintiennent le moyen d'accouplement sélectif (18a, 18b) dans ledit état prédéterminé.

2. Dispositif de transmission selon la revendication 1, caractérisé en ce que les moyens de sollicitation supplémentaire, lorsqu'ils appliquent la force supplémentaire, favorisent le fonctionnement du dispositif de transmission selon son rapport de transmission le plus court.

3. Dispositif de transmission selon la revendication 1 ou 2, caractérisé en ce que les moyens de sollicitation antagonistes comprennent des masselottes centrifuges (29) qui sollicitent le moyen d'accouplement sélectif vers l'état accouplé.

4. Dispositif selon l'une des revendications 1 à 3,
caractérisé en ce que les moyens de sollicitation antagonistes comprennent des moyens pour transmettre au moyen d'accouplement sélectif, dans le sens du désaccouplement, une force qui est fonction du couple transmis.

5. Dispositif selon l'une des revendications 1 à 3,
caractérisé en ce que les moyens de sollicitation antagonistes comprennent des moyens pour transmettre au moyen d'accouplement sélectif, dans le sens du désaccouplement, une force de répulsion de denture à laquelle est soumise l'une des dentures engrenées lorsqu'elle est sous charge.

6. Dispositif selon la revendication 5, caractérisé en ce que le moyen d'accouplement sélectif est monté de façon à transmettre de la puissance à la place de ladite denture lorsqu'il est à l'état accouplé, de manière que ladite denture soit au moins partiellement déchargée lorsque le moyen d'accouplement est à l'état accouplé.

7. Dispositif de transmission selon l'une des revendications 1 à 6, caractérisé en ce que la combinaison d'éléments rotatifs à dentures interengrenées comprend un engrenage différentiel, et le moyen d'accouplement sélectif est un embrayage (18b) monté fonctionnellement entre deux des éléments rotatifs (8, 13) pour faire sélectivement fonctionner l'engrenage différentiel selon un premier et un deuxième des deux rapports de transmission, l'élément rotatif (9) associé à la roue libre (16) étant un élément rotatif de réaction (9) que la roue libre (16) empêche de tourner en inverse lorsque l'embrayage (18b) permet une rotation relative entre lesdits deux éléments rotatifs (13, 8).

8. Dispositif de transmission selon la revendication 7, caractérisé en ce que lesdits moyens d'activation sont des moyens d'immobilisation (43) pour sélectivement bloquer l'élément rotatif de réaction (9) indépendamment de la roue libre (16) et en ce que le dispositif de transmission comprend en outre des moyens d'actionnement (44, 46b, 46c) pour simultanément actionner les moyens d'immobilisation (43) dans le sens du blocage et les moyens de sollicitation supplémentaire (47) dans le sens du desserrage de l'embrayage (18b).

9. Dispositif selon la revendication 8, caractérisé en ce que les moyens d'immobilisation comprennent un frein (43) monté fonctionnellement en parallèle avec la roue libre (16).

10. Dispositif selon la revendication 8 ou 9,
caractérisé en ce que les moyens d'actionnement comprennent un vérin (44, 46b, 46c).

11. Dispositif selon la revendication 10,
caractérisé en ce qu'un piston (44) du vérin actionne directement les moyens d'immobilisation (43), et sollicite l'embrayage (18b) dans le sens du desserrage par l'intermédiaire d'une butée axiale (B4).

12. Dispositif de transmission selon l'une des revendications 1 à 11, caractérisé par des moyens (69a, 69b, 69c) pour piloter la mise en action des moyens de sollicitation supplémentaire lorsqu'une vitesse de rotation devient inférieure à un seuil prédéterminé, et des moyens (66, 71, 71b, 71c) pour commander sélectivement ladite mise en action indépendamment du seuil prédéterminé.

13. Dispositif de transmission selon la revendication 12, caractérisé en ce que ladite vitesse de rotation est détectée par une pompe tachymétrique (57) placée en amont de l'entrée du dispositif de transmission.

14. Dispositif de transmission selon la revendication 12 ou 13, caractérisé en ce que les moyens pour commander sélectivement la mise en action des moyens de sollicitation supplémentaire indépendamment du seuil comprennent des moyens à commande manuelle (71, 71b, 71c) modifiant la tension d'un ressort (72, 72b, 72c) agissant contre une pression caractéristique de ladite vitesse de rotation.

15. Dispositif selon l'une des revendications 1 à 14, caractérisé en ce que les moyens de sollicitation antagonistes comprennent des moyens élastiques (34) pour solliciter le moyen d'accouplement sélectif vers l'état accouplé.

16. Procédé pour piloter un dispositif de transmission selon la revendication 15, caractérisé en ce que pour la mise en mouvement d'un arbre de sortie (2c) du dispositif, on met en action les moyens de sollicitation supplémentaire (47) pour placer le moyen d'accouplement sélectif à l'état désaccouplé à l'encontre des moyens élastiques (34) de façon que la mise en mouvement débute avec le rapport de transmission le plus court.

17. Procédé selon la revendication 16, caractérisé en ce que pour un fonctionnement au point mort, on met simultanément en action les moyens de sollicitation supplémentaire (47, 44a) dans le sens du désaccouplement, et un moyen d'embrayage d'entrée (38) pour permettre à un arbre d'entrée (2a) du dispositif de transmission de tourner alors que l'arbre de sortie du dispositif de transmission (2c) a une vitesse nulle.

18. Procédé pour piloter un dispositif de transmission selon l'une des revendications 1 à 15, caractérisé en ce que lorsque le couple appliqué à un arbre d'entrée (2a) du dispositif est en sens contraire de la rotation de cet arbre, on met sélectivement en action les moyens de sollicitation supplémentaire pour faire fonctionner la combinaison de dentures avec son rapport de transmission le plus court.

19. Procédé selon la revendication 18, caractérisé en ce qu'on met en action les moyens de sollicitation supplémentaire de manière à favoriser le fonctionnement du dispositif de transmission selon son rapport de transmission le plus court lorsque des freins d'un véhicule équipé du dispositif de transmission sont actionnés.

20. Procédé pour piloter un dispositif de transmission selon l'une des revendications 1 à 15, caractérisé en ce qu'on met en action les moyens de sollicitation supplémentaire (44, 46, 47) et les moyens d'activation (43) lorsqu'on détecte une forte demande de puissance de la part du conducteur du véhicule, pour favoriser le fonctionnement du dispositif de transmission selon un rapport court.

21. Procédé selon la revendication 20, pour piloter un dispositif de transmission comportant des moyens pour stabiliser chaque état de l'embrayage en déplaçant les conditions de changement d'état après chaque changement d'état, caractérisé en ce qu'on met en action les moyens de sollicitation supplémentaire de manière impulsionnelle lorsqu'on détecte une forte demande de puissance.

22. Procédé pour piloter un dispositif de transmission selon la revendication 3, caractérisé en ce qu'on met en action les moyens de sollicitation supplémentaire (44, 47) de façon qu'ils appliquent au moyen d'accouplement sélectif (18b) une force qui ne surmonte celle des masselottes centrifuges (29) que si la force des masselottes correspond à une vitesse permettant de passer au plus court des deux rapports de transmission sans risque de survitesse à l'entrée (2a) du dispositif.

## Patentansprüche

1. Getriebeanordnung mit einer Kombination (7) von mit in gegenseitigem Eingriff stehende Verzahnungen tragenden drehenden Elementen, einem Mittel (18a, 18b) zur selektiven Kupplung, das von gegenwirkenden Belastungsmitteln (29, 34) beaufschlagt wird, die Kräfte erzeugen, von denen wenigstens eine (Fa, Pac) monoton in Abhängigkeit mindestens eines Betriebsparameters der Getriebeanordnung variiert, und einem Freilauf (16), der so montiert ist, daß er selektiv eines der drehenden Elemente (9) betätigt, wenn das Mittel (18a, 18b) zur selektiven Kupplung sich in einem ausgekuppelten Zustand befindet, wobei die Kombination von drehenden Elementen zwei verschiedene Übersetzungen bildet, je nachdem ob sich das Mittel zur selektiven Kupplung im ausgekuppelten Zustand oder im eingekuppelten Zustand befindet, und wobei die Anordnung außerdem Zusatzbelastungsmittel (44, 46, 47) zur selektiven Ausübung einer zusätzlichen Kraft auf das Mittel (18a, 18b) zur selektiven Kupplung, welche zusätzliche Kraft einen vorbestimmten der Zustände - eingekuppelter Zustand und ausgekuppelter Zustand - des Mittels zur selektiven Kupplung und demgemäß die Einstellung der entsprechenden Übersetzung begünstigt, sowie Betätigungsmittel (43) umfaßt, um unabhängig vom Freilauf (16) das dem Freilauf zugeordnete drehende Element (9) in einen Betätigungszustand zu bringen, der der durch die zusätzliche Kraft begünstigten Übersetzung entspricht, dadurch gekennzeichnet, daß die Betätigungsmittel (43) mechanisch mit den Zusatzbelastungsmitteln (44, 46, 47) gekoppelt sind, um den genannten Betätigungszustand herzustellen, wenn die Zusatzbelastungsmittel (44, 46, 47) das Mittel (18a, 18b) zur selektiven Kupplung in dem genannten vorbestimmten Zustand halten.

2. Getriebeanordnung nach Anspruch 1, dadurch gekennzeichnet, daß die Zusatzbelastungsmittel, wenn sie die zusätzliche Kraft ausüben, den Betrieb der Getriebeanordnung in seiner kürzesten Übersetzung begünstigen.

3. Getriebeanordnung nach Anspruch 1 oder 2, dadurch gekennzeichnet, daß die gegenwirkenden Belastungsmittel Fliehgewichte (29) umfassen, die das Mittel zur selektiven Kupplung in Richtung des eingekuppelten Zustandes belasten.

4. Anordnung nach einem der Ansprüche 1 bis 3, dadurch gekennzeichnet, daß die gegenwirkenden Belastungsmittel Mittel umfassen, um auf das Mittel zur selektiven Kupplung im Sinne des Auskuppelns eine vom übertragenen Drehmoment abhängige Kraft zu übertragen.

5. Anordnung nach einem der Ansprüche 1 bis 3, dadurch gekennzeichnet, daß die gegenwirkenden Belastungsmittel Mittel umfassen, um auf das Mittel zur selektiven Kupplung im Sinne des Auskuppelns eine Verzahnungsabstoßkraft zu übertragen, der eine der ineinandergreifenden Verzahnungen ausgesetzt ist, wenn sie unter Belastung steht.

6. Anordnung nach Anspruch 5, dadurch gekennzeichnet, daß das Mittel zur selektiven Kupplung so montiert ist, daß es anstelle der genannten Verzahnung Leistung überträgt, wenn es sich im eingekuppelten Zustand befindet, sodaß die genannte Verzahnung wenigstens teilweise entlastet ist, wenn sich das Kupplungsmittel im eingekuppelten Zustand befindet.

7. Getriebeanordnung nach einem der Ansprüche 1 bis 6, dadurch gekennzeichnet, daß die Kombination von drehenden Elementen mit in gegenseitigem Eingriff stehenden Verzahnungen ein Differential umfaßt, und daß das Mittel zur selektiven Kupplung eine ausrückbare Kupplung (18b) ist, die funktionell zwischen zwei drehenden Elementen (8, 13) montiert ist, um das Differential selektiv in einer ersten und einer zweiten von zwei Übersetzungen laufen zu lassen, wobei das dem Freilauf (16) zugeordnete drehende Element (9) ein drehendes Reaktionselement ist, das vom Freilauf (16) gehindert wird, sich umgekehrt zu drehen, wenn die Ausrückkupplung eine Relativverdrehung zwischen den genannten zwei drehenden Elementen (13, 8) erlaubt.

8. Getriebeanordnung nach Anspruch 7, dadurch gekennzeichnet, daß die genannten Betätigungsmittel Blockierungsmittel (43) zur selektiven Blockierung des drehenden Reaktionselements (9) unabhängig vom Freilauf (16) sind, und daß die Getriebeanordnung außerdem Betätigungsmittel (44, 46b, 46c) zur gleichzeitigen Betätigung der Blockierungsmittel (43) im Sinne des Blockierens und der Zusatzbelastungsmittel (47) im Sinne des Lösens der ausrückbaren Kupplung (18b) umfaßt.

9. Anordnung nach Anspruch 8, dadurch gekennzeichnet, daß die Blockierungsmittel eine Bremse (43) umfassen, die mit dem Freilauf (16) funktionell parallelgeschaltet ist.

10. Anordnung nach Anspruch 8 oder 9, dadurch gekennzeichnet, daß die Betätigungsmittel einen Stellantrieb (44, 46b, 46c) umfassen.

11. Anordnung nach Anspruch 10, dadurch gekennzeichnet, daß ein Kolben (44) des Stellantriebs direkt die Blockierungsmittel (43) betätigt und die ausrückbare Kupplung (18b) mittels eines Axiallagers (B4) im Sinne des Lösens belastet.

12. Getriebeanordnung nach einem der Ansprüche 1 bis 11, gekennzeichnet durch Mittel (69a, 69b, 69c) zur Steuerung der Betätigung der Zusatzbelastungsmittel, wenn eine Rotationsgeschwindigkeit unter einen vorbestimmten Schwellwert sinkt, und durch Mittel (66, 71, 71b, 71c) zur selektiven Steuerung der Betätigung unabhängig vom vorbestimmten Schwellwert.

13. Getriebeanordnung nach Anspruch 12, dadurch gekennzeichnet, daß die genannte Rotationsgeschwindigkeit von einer Tachometerpumpe (57) abgefühlt wird, die stromauf des Antriebs der Getriebeanordnung montiert ist.

14. Getriebeanordnung nach Anspruch 12 oder 13, dadurch gekennzeichnet, daß die Mittel zur selektiven Steuerung der Betätigung der Zusatzbelastungsmittel unabhängig vom Schwellwert Mittel (71, 71b, 71c) zur manuellen Steuerung umfassen, die die Spannung einer Feder (72, 72b, 72c) verändern, welche gegen einen charakteristischen Druck der genannten Rotationsgeschwindigkeit wirkt.

15. Anordnung nach einem der Ansprüche 1 bis 14, dadurch gekennzeichnet, daß die gegenwirkenden Belastungsmittel elastische Mittel (34) zur Belastung des Mittels zur selektiven Kupplung in Richtung des eingekuppelten Zustandes umfassen.

16. Verfahren zur Steuerung einer Getriebeanordnung nach Anspruch 15, dadurch gekennzeichnet, daß man zur Inbewegungsetzung einer Abtriebswelle (2c) der Anordnung die Zusatzbelastungsmittel (47) betätigt, um das Mittel zur selektiven Kupplung gegen die Wirkung der elastischen Mittel (34) in den ausgekuppelten Zustand zu bringen, derart, daß die Inbewegungsetzung mit der kürzesten Übersetzung beginnt.

17. Verfahren nach Anspruch 16, dadurch gekennzeichnet, daß man für einen Betrieb in Leerlaufstellung gleichzeitig die Zusatzbelastungsmittel (47, 44a) im Sinne des Auskuppelns und ein Antriebskupplungsmittel (38) betätigt, um einer Antriebswelle (2a) der Getriebeanordnung zu erlauben, sich zu drehen, während die Abtriebswelle (2c) der Getriebeanordnung die Geschwindigkeit Null hat.

18. Verfahren zur Steuerung einer Getriebeanordnung nach einem der Ansprüche 1 bis 15, dadurch gekennzeichnet, daß man, wenn das auf eine Antriebswelle (2a) der Anordnung ausgeübte Drehmoment im entgegengesetzten Sinn zur Drehung dieser Welle ist, selektiv die Zusatzbelastungsmittel betätigt, um die Kombination von Verzahnungen in ihrer kürzesten Übersetzung laufen zu lassen.

19. Verfahren nach Anspruch 18, dadurch gekennzeichnet, daß man die Zusatzbelastungsmittel so betätigt, daß der Betrieb der Getriebeanordnung in deren kürzester Übersetzung begünstigt wird, wenn Bremsen eines mit der Getriebeanordnung ausgerüsteten Fahrzeuges betätigt werden.

20. Verfahren zur Steuerung einer Getriebeanordnung nach einem der Ansprüche 1 bis 15, dadurch gekennzeichnet, daß man die Zusatzbelastungsmittel (44, 46, 47) und die Betätigungsmittel (43) betätigt, wenn seitens des Fahrers des Fahrzeuges ein großer Leistungsbedarf festgestellt wird, um den Betrieb der Getriebeanordnung in einer kurzen Übersetzung zu begünstigen.

21. Verfahren nach Anspruch 20, zur Steuerung einer Getriebeanordnung mit Mitteln zur Stabilisierung jedes Zustandes der ausrückbaren Kupplung durch Verschieben der Bedingungen des Zustandswechsels nach jedem Zustandswechsel, dadurch gekennzeichnet, daß man die Zusatzbelastungsmittel impulsartig betätigt, wenn man einen großen Leistungsbedarf feststellt.

22. Verfahren zur Steuerung einer Getriebeanordnung nach Anspruch 3, dadurch gekennzeichnet, daß man die Zusatzbelastungsmittel (44, 47) so betätigt, daß sie auf das Mittel (18b) zur selektiven Kupplung eine Kraft ausüben, die jene der Fliehgewichte (29) nur übersteigt, wenn die Kraft der Gewichte einer Geschwindigkeit entspricht, die erlaubt, ohne Gefahr einer Überdrehzahl am Antrieb (2a) der Anordnung auf die kürzere zweier Übersetzungen überzugehen.

## Claims

1. A transmission device comprising a combination of rotating elements carrying intermeshing gears (7), a selective connection means (18a, 18b), attacked by opposing means of stress (29, 34) producing forces of which at least one (Fa, Pac) varies monotonically depending on at least one operating parameter of the transmission device, and a free wheel (16) mounted for selectively activating one of the rotating elements (9) when the selective connection means (18a, 18b) is in a disconnected state, the combination of rotating elements creating two different transmission ratios depending on whether the selective connection means is in the disconnected state or in a connected state,
respectively, the device further comprising means of additional stress (44, 46, 47) for selectively applying to the connecting means (18a, 18b) an additional force promoting a predetermined one of the connected and disconnected states of the selective connection means, and consequently promoting prevalence of the corresponding transmission ratio in the transmission device, and activation means for, independently of the free wheel (16), subjecting the rotating element (9) associated with the free wheel to an activation state corresponding to the transmission ratio which is promoted by the additional stress, characterized in that the activation means (43) are mechanically conjugated with the means of additional stress (44, 46, 47) for completing said activation state when said means of additional stress (44, 46, 47) maintains said selective connection means (18a, 18b) in said predetermined state.

2. A transmission device according to claim 1,
characterised in that the means of additional stress, when they apply the additional force, promote operation of the transmission device according to its shortest transmission ratio.

3. A trasmission device according to claim 1 or 2,
characterised in that the opposing means of stress comprise centrifugal fly-weights (29) which stress the selective connection means towards the connected state.

4. A transmission device according to one of claims 1 to 3, characterised in that the opposing means of stress comprise means for transmitting to the selective connection means, in the direction of disconnection, a force which depends on the torque transmitted.

5. A transmission device according to one of Claims 1 to 3, characterised in that the opposing means of stress comprise means for transmitting to the selective connection means, in the direction of disconnection, a repulsive tooth force to which one of the intermeshed gears is subjected when it is under load.

6. A transmission device according to Claim 5,
characterised in that the selective connection means is mounted so as to transmit power instead of the said gear when it is in the connected state, so that the said gear is at least partly unloaded when the connection means is in the connected state.

7. A transmission device according to any one of Claims 1 to 6, characterised in that the combination of rotating elements having intermeshed gears comprises a differential set of gears and the selective connection means is a clutch (18b) mounted operatively between two of the rotating elements (8, 13) to cause the differential gear to operate selectively according to a first and a second of said two transmission ratios, the rotating element (9) associated with the free wheel (16) being a reaction rotating element that the free wheel (16) prevents from rotating in reverse when the clutch (18b) allows relative rotation between said two rotating elements (13, 8).

8. A transmission device according to Claim 7,
characterised in that said means of activation are means of immobilisation (43) selectively to lock the rotating reaction element (9) independently of the free wheel (16), and the transmission device further comprises actuator means (44, 46b, 46c) for simultaneously actuating the means of immobilisation (43) in the direction of locking and the means of additional stress (47) in the direction of release of the clutch (18b).

9. A transmission device according to Claim 8,
characterised in that the means of immobilisation comprise a brake (43) mounted operatively in parallel with said free wheel (16).

10. A transmision device according to claim 8 or 9,
characterised in that the actuator means comprise a jack (44, 46b, 46c).

11. A transmission device according to claim 10,
characterised in that a piston (44) of the jack directly actuates the means of immobilisation (43) and stresses said clutch (18b) in the release direction via an axial thrust bearing (B4).

12. A transmission device according to any one of Claims 1 to 11, characterised by means (69a, 69b, 69c) for controlling activation of the means of additional stress when a speed of rotation falls below a set theshold, and means (66, 71, 71b, 71c) selectively to control the said activation independently of the set threshold.

13. A transmission device according to Claim 12,
characterised in that the said speed of rotation is detected by a tachometric pump (57) located upstream of the input shaft of the transmission device.

14. A transmission device according to Claim 12 or 13, characterised in that the means for selectively controlling activation of the means of additional stress independently of the threshold comprise manually-controlled means (71, 71b, 71c)modifying the tension of a spring (72, 72b, 72c) counteracting a pressure which is characteristic of the said speed of rotation.

15. A transmission according to any one of Claims 1 to 14, characterised in that the opposing means of stress comprise resilient means (34) for stressing the selective connection means towards the connected state.

16. A method for controlling a transmission device according to Claim 15, characterised in that in order to start motion of an output shaft (2c) of the device , the means of additional stress (47) are activated to place the selective connection means in the disconnected state against the action of the resilient means (34) so that motion begins on the shortest transmission ratio.

17. A method according to Claim 16, characterised in that for operation in neutral , the means of additional stress (47, 44a) are activated thereby to establish the diconnected state, and simultaneously an input clutch (38) is activated to enable rotation of an input shaft (2a) of the transmission device while the output shaft (2c) of the transmission device has zero speed.

18. A method for controlling a transmission device according to any one of Claims 1 to 15, characterised in that when the torque applied to an input shaft (2a) of the device is in the opposite direction to the direction of rotation of said shaft, the means of additional stress are selectively activated to make the combination of gears operate on its shortest transmission ratio .

19. A method according to Claim 18, characterised in that the means of additional stress are activated so as to promote operation of the transmission device on its shortest transmission ratio when the brakes of a vehicle equipped with the transmission device are applied.

20. A method for controlling a transmission device according to any one of Claims 1 to 15, characterised in that the means of additional stress (43, 44, 47) and the activation means are activated when there is a strong demand for power by the vehicle's driver, to promote operation of the transmission device on a short ratio.

21. A method according to Claim 20, for controlling a transmission device comprising means for stabilising each state of the clutch by altering the conditions of change of state after each change of state,
characterised in that the means of additional stress are activated by surges when a strong demand for power is detected.

22. A method for controlling a transmission device according to Claim 3, characterised in that the means of additional stress (44, 47) are activated so that they apply to the selective connection means (44, 47) a force which exceeds that of the centrifugal fly-weights (29) only if the force of the fly-weights corresponds to a speed making it possible to shift to the shortest of the two transmission ratios without the risk of overspeed at the device's input (2a).
